# EUROPÄISCHE PATENTSCHRIFT

(11) **EP 2 275 668 B1**
(45) Veröffentlichungstag und Bekanntmachung des Hinweises auf die Patenterteilung: **18.03.2015**
(21) Anmeldenummer: 10006574.7
(22) Anmeldetag: 24.06.2010
(51) Int. Cl.: F03B 1/02

(54) **Turbinenlaufrad sowie Verfahren zu dessen Herstellung**
Rotor of a turbine and method of manufacture
Rotor de turbine et procédé de fabrication

(30) Priorität: 16.07.2009 AT 11252009
(43) Veröffentlichungstag der Anmeldung: 19.01.2011
(73) Patentinhaber: Andritz Hydro GmbH, 1141 Wien (AT)
(72) Erfinder: Hermann, Carsten, 88250 Weingarten (DE); Sugg, Josef, 88367 Hohentengen (DE); Rippl, Andreas, 88213 Ravensburg (DE)
(74) Vertreter: Schweinzer, Friedrich

(56) Entgegenhaltungen:
- EP-A1- 0 496 181
- EP-A2- 1 437 512
- DE-A1- 10 250 482
- GB-A- 564 309
- US-A1- 2008 191 487

## Beschreibung

Die Erfindung betrifft ein Verfahren zum Herstellen eines Peltonlaufrades, bei dem mehrere Scheiben, welche die Kontur des Turbinenlaufrades aufweisen, aufeinander geschichtet und miteinander verbunden werden. Weiters betrifft die Erfindung ein Peltonlaufrad.

Laufräder von Peltonturbinen werden traditionell als Gusskörper ausgeführt. Bei einem weiteren bekannten Verfahren werden die Schmiedebecher mit einer Schmiedenabe verschweißt. Die Folge derartiger Herstellungsverfahren sind sehr lange Lieferzeiten für die Rohteile von Laufrädern von Turbinen, insbesondere Peltonturbinen, wegen der Notwendigkeit der Beschaffung großer Schmiede- bzw. Gussteile. Bei neueren Verfahren werden gemäß EP 0 496 181 A1 die Becher von Laufrädern von Peltonturbinen mittels eines Schweißroboters. Lage für Lage aus Schweißgut auf einer Schmiedenabe aufgebaut. Weiters zeigt u.a. die US 2008/191487 A1 einen Windrad-Generator mit Savonius-Rotor. Hier wird eine Anzahl von Flügelsegmenten, die alle gleiche Höhe und Durchmesser aufweisen, sowie mittels Stegen an Hülsen, die mit einer Generatorwelle verbunden sind, befestigt. Durch die Ausführung der Hülse und der Generatorwelle mit Zähnen, wird auch die Position der Segmente bestimmt, wobei dadurch auch gewährleistet wird, dass die Segmente direkt übereinander angeordnet sind. Die EP 1 437 512 A2 betrifft eine Zweiwellenvakuumpumpe. Hier wird der Rotor aus einer Vielzahl von Scheiben zusammengesetzt, so dass Anpassungen des Rotorprofiles problemlos vorgenommen werden können. Die Scheiben sind an einer Welle im Winkel zueinander angeordnet und durch Stifte in Position gehalten. Hier wird erst durch das Zusammensetzen von mehreren Scheiben eine Kontur gebildet wobei es darauf ankommt, die sich bildende Kontur immer wieder verändern zu können.

Ziel der Erfindung ist es, ein Peltonlaufrad sowie ein Herstellungsverfahren für Peltonlaufräder zu schaffen, bei dem die Lieferzeiten des Grundmaterials gering sind und die einfach und günstig durchführbar bzw. herstellbar sind.

Gelöst wird diese Aufgabe bei einem Verfahren der eingangs genannten Art dadurch, dass mehrere Scheiben, welche die Kontur des Peltonlaufrades aufweisen, aufeinander geschichtet und miteinander verschweißt oder durch Hartlöten der Auflagefläche zwischen den einzelnen Scheiben verbunden werden.

Gelöst wird diese Aufgabe des Weiteren bei einem Peltonlaufrad der eingangs genannten Art dadurch, dass es aus mehreren stoffschlüssig miteinander verbundenen Scheiben aufgebaut ist, die miteinander verschweißt oder durch Hartlöten der Auflagefläche zwischen den einzelnen Scheiben verbunden sind.

Das erfindungsgemäße Verfahren und das erfindungsgemäße Peltonlaufrad weisen den Vorteil auf, dass sie einfache Teile, nämlich die Kontur des Peltonlaufrades aufweisende Scheiben zur Herstellung verwenden bzw. aus diesen bestehen, welche stoffschlüssig miteinander verbunden sind, sodass die Lieferzeit des Grundmaterials von etwa einem Jahr bei Schmiedeteilen auf wenige Wochen bei Blechen reduziert werden kann. Außerdem sind die einzelnen Scheiben aus Blechen einfach, schnell und günstig herstellbar.

Eine günstige Weiterbildung der Erfindung ist dadurch gekennzeichnet, dass die Scheiben mittels Laserschnitt oder Brennschnitt aus Blechentafeln bzw. -platten erzeugt werden. Damit lassen sich die einzelnen Scheiben besonders einfach der herzustellenden Geometrie entsprechend fertigen.

Werden Blechentafeln bzw. -platten unterschiedlicher Dicken herangezogen, so kann der Fertigungsaufwand variabel gestaltet werden, wodurch eine Reduktion der Blechlagen erzielt wird. Es kann dadurch auch in Hinsicht auf den Verschnitt optimiert werden.

Eine vorteilhafte Weiterbildung der Erfindung ist dadurch gekennzeichnet, dass die Scheiben miteinander verschweißt werden und insbesondere, dass die einzelnen Scheiben durch flächiges Verschweißen der Scheiben wenigstens an Teilen ihrer Oberflächenkontur verbunden werden. Wenn mit dem Schweißgut eine Schicht mit geeigneter Härte und Festigkeit gegen Abrasion hergestellt wird, kann eine Verbindung der Scheiben gemeinsam mit einer hohen Härte der Oberfläche erreicht werden.

Alternativ können die einzelnen Scheiben durch Hartlöten der Auflagefläche zwischen den einzelnen Blechlagen verbunden werden. Dies gewährleistet eine starke Haftung der einzelnen Schichten aneinander. Bevorzugte werden die einzelnen Scheiben durch Hartlöten der Auflagefläche zwischen den einzelnen Scheiben verbunden, wobei zusätzlich oder alternativ die einzelnen Scheiben Nuten zur Aufnahme von Lot in Bandform aufweisen können.

Eine günstige Ausgestaltung der Erfindung ist dadurch gekennzeichnet, dass auf die Flügel- bzw. Becheroberfläche eine abrasionsfeste Schicht aufgebracht wird, wobei die abrasionsfeste Schicht durch Flammspritzen oder Plasmaspritzen aufgebracht werden kann.

Eine vorteilhafte Weiterbildung der Erfindung ist dadurch gekennzeichnet, dass die einzelnen Scheiben in Winkelsegmente unterteilt werden. Dadurch kann der Verschnitt wesentlich reduziert werden. Wenn das Peltonlaufrad aus Scheiben unterschiedlicher Dicken hergestellt wird, ermöglicht dies eine höhere Flexibilität bei der Gestaltung und Fertigung des Peltonlaufrades. Außerdem kann dadurch die Anzahl der einzelnen Scheiben verringert werden.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung eines bevorzugten Ausführungsbeispiels der Erfindung mit Bezug auf die angeschlossenen Zeichnungen, in denen
Fig. 1 ein aus Schichten aufgebautes Peltonlaufrad,
Fig. 2 ein erfindungsgemäßes Peltonlaufrad in Explosionsdarstellung und
Fig. 3 ein Peltonlaufrad mit Schichten aus Blechen variabler Dicke,
darstellt.

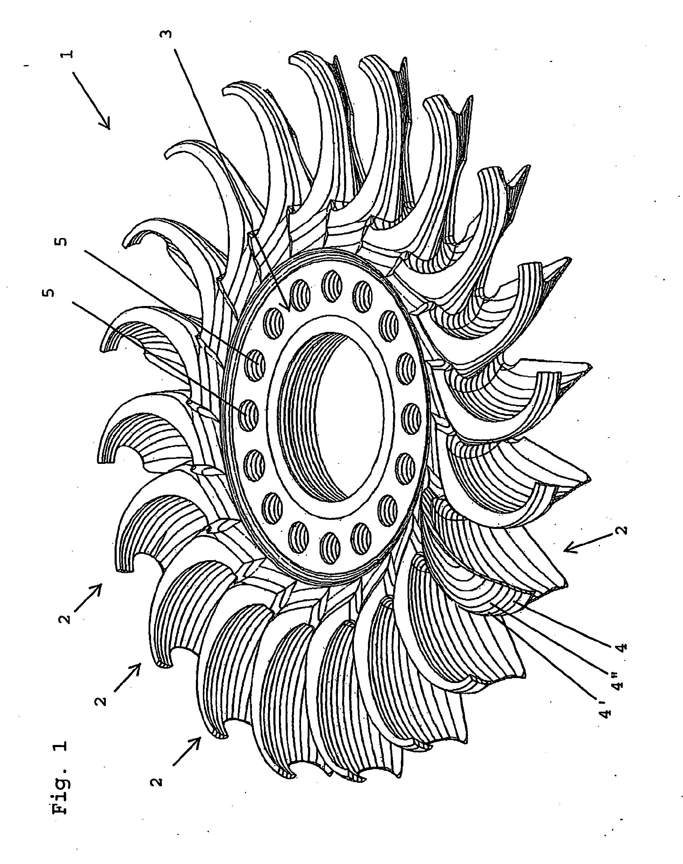

Fig. 1 zeigt ein Peltonlaufrad 1 mit einer Anzahl von (hier dargestellt zwanzig) Peltonbechern 2 und einem Befestigungsring 3 gemäß der Erfindung. Bisherige Peltonlaufräder nach dem Stand der Technik wurden entweder aus einem Stück hergestellt und damit unter viel Materialverlust und Herstellungsaufwand aus einem Gussstück herausgearbeitet oder die einzelnen, gegossenen oder geschmiedeten Peltonbecher 2 wurden am Befestigungsring 3 separat befestigt.

Beim Peltonlaufrad 1 gemäß der Erfindung wird dem gegenüber eine Anzahl von Scheiben 4, 4', 4" usw. aufeinander geschichtet, die entsprechend der Position am Laufrad 1, d.h. abhängig davon in welcher Ebene sie liegen, unterschiedlich geformt sind. Die aus Blechtafeln herausgeschnittenen oder gegebenenfalls herausgestanzten Scheiben 4, 4', 4" usw. werden dann zu einem Laufrad 1 zusammengefügt und verspannt, worauf die einzelnen Scheiben 4, 4', 4" usw. mittels Schweißen oder Hartlöten fest miteinander verbunden werden.

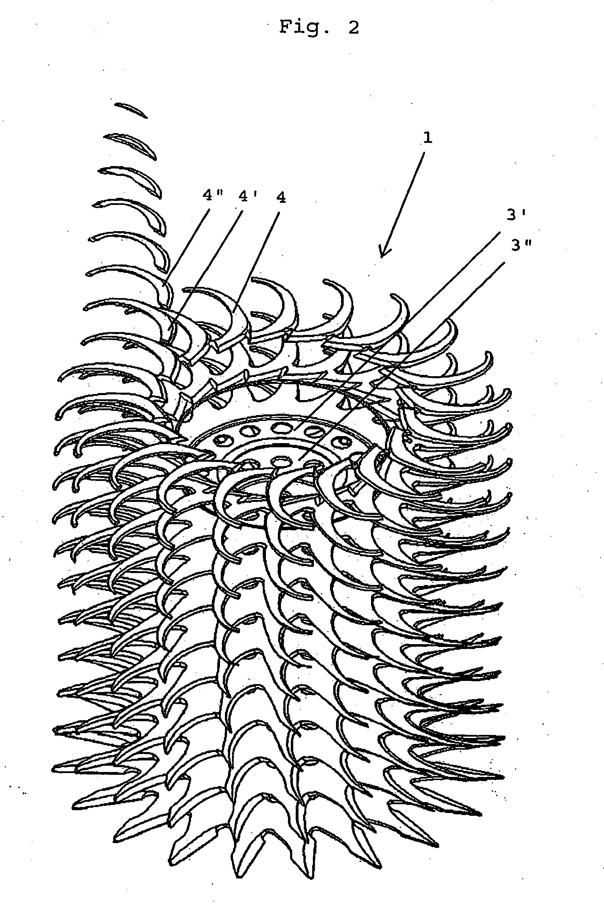

In Fig. 1 ist ein einziger Becher 2 vollständig hergestellt dargestellt, wogegen alle anderen Becher 2 noch nicht fertig gestellt sind. An diesem vollständig hergestellten Becher 2 ist zu erkennen, dass es Scheiben 4', 4" gibt, welche für jeden Becher 2 einzeln bzw. lose vorgefertigten werden, da sie keine direkte Verbindung zu benachbarten Bechern 2 haben, wogegen andere Scheiben 4 einstückig für alle Becher 2 sind. In Fig. 2 ist eine Explosionszeichnung eines Peltonlaufrades 1 dargestellt, bei der dies besser zu erkennen ist. Hier sind die einzelnen Scheiben 4, 4', 4" erkennbar, die aus den Blechtafeln herausgeschnitten bzw. herausgestanzt wurden, wobei die Scheiben 4', 4" und die weiter nach oben folgenden Scheiben (aus Gründen der übersichtlicheren Darstellung nur für einen einzigen Becher 2 gezeichnet) separate Teile für jeden Becher 2 sind, wogegen die Scheibe 4 und die nach unten folgenden Scheiben für alle Becher 2 einteilig sind. In Fig. 2 ist auch zu erkennen, dass weiter in der Mitte liegende Scheiben entsprechende Abschnitte 3', 3" usw. aufweisen, aus denen der Befestigungsring 3 zusammengesetzt wird.

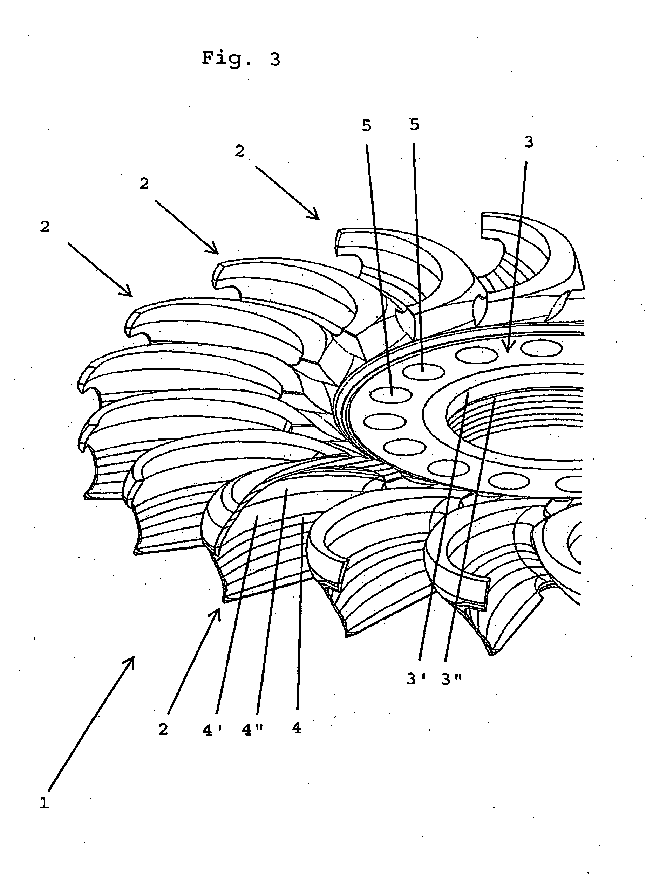

In Fig. 1 und Fig. 2 werden Bleche bzw. Scheiben 4, 4', 4" gleicher Dicke verwendet. Fig. 3 zeigt eine Variante der Erfindung, bei der Scheiben 4, 4', 4" unterschiedlicher Dicke verwendet werden. Im dargestellten Ausführungsbeispiel sind die Scheiben 4' und 4" dicker als die Scheibe 4 und die darüber und darunter liegenden Scheiben. Dies ermöglicht eine höhere Flexibilität bei der Gestaltung und Fertigung des Peltonlaufrades 1. Außerdem kann dadurch die Anzahl der einzelnen Scheiben verringert werden.

Die einzelnen Scheiben, insbesondere die durchgehenden Scheiben wie die Scheibe 4, können auch noch zusätzlich in einzelne Winkelsegmente unterteilt werden, was unter Umständen die Herstellung und den Transport erleichtert und außerdem dazu dienen kann, den Verschnitt bei der Herstellung der einzelnen Scheiben zu verringern.

Verbunden werden die einzelnen Scheiben 4, 4', 4" bevorzugt durch Schweißen oder durch Hartlöten. Beim Schweißen kann entweder die gesamte Oberfläche des Peltonlaufrades 1 oder auch nur Flächenabschnitte der Oberfläche, bevorzugt die gesamte Oberfläche der Schaufeln 4, mit einer oder mehreren Schweißlagen überzogen werden, wodurch nicht nur die einzelnen Scheiben miteinander verschweißt werden, sondern gleichzeitig durch eine geeignete Auswahl des Schweißgutes eine Schicht mit geeigneter Härte und Festigkeit gegen Abrasion hergestellt werden kann. Die endgültige Kontur des Peltonlaufrades 1 wird anschließend durch Fräsen oder Schleifen hergestellt. Alternativ kann die Verbindung der Bleche durch Hartlöten der kompletten Auflagefläche zwischen den einzelnen Scheiben 4, 4', 4" erfolgen. Hierzu kann entweder eine flächige Aufbringung des Lots vorgesehen sein oder es können Nuten zur Einbettung von Lot in Bandform an den Kontaktflächen der Scheiben vorgesehen sein. In einem nachfolgenden Arbeitsschritt kann eine abrasionfeste Beschichtung auf an sich bekannte Weise auf die Oberfläche der Becher 2 aufgebracht werden.

Der Befestigungsring 3 weist Bohrungen 5 auf, die zur Verschraubung mit einem Wellenflansch dienen. Gleichzeitig wird dadurch eine zusätzliche Verspannung des Blechpaketes und somit eine größere Stabilität erreicht.

## Patentansprüche

1. Verfahren zum Herstellen eines Peltonlaufrades (1), bei dem mehrere Scheiben (4, 4', 4"), welche die Kontur des Peltonlaufrades aufweisen, aufeinander geschichtet und miteinander verbunden werden, **dadurch gekennzeichnet, dass** die Scheiben (4, 4', 4") miteinander verschweißt oder durch Hartlöten der Auflagefläche zwischen den einzelnen Scheiben (4, 4', 4") verbunden werden, wobei die einzelnen
Scheiben (4, 4', 4") durch flächiges Verschweißen der Scheiben (4, 4', 4") wenigstens an Teilen der Oberflächenkontur des Peltonlaufrades (1) verbunden werden.

2. Verfahren nach Anspruch 1, **dadurch gekennzeichnet, dass** mit dem Schweißgut eine Schicht mit geeigneter Härte und Festigkeit gegen Abrasion hergestellt wird.

3. Verfahren nach einem der Ansprüche 1 bis 2, **dadurch gekennzeichnet, dass** auf Flügel bzw. Becher (2) des Peltonlaufrades (1) eine abrasionsfeste Schicht aufgebracht wird.

4. Verfahren nach Anspruch 3, **dadurch gekennzeichnet, dass** die abrasionsfeste Schicht durch Flammspritzen oder Plasmaspritzen aufgebracht wird.

5. Verfahren nach einem der Ansprüche 1 bis 4, **dadurch gekennzeichnet, dass** die Scheiben (4, 4', 4") mittels Laserschnitt oder Brennschnitt aus Blechentafeln bzw. -platten erzeugt werden.

6. Verfahren nach einem der Ansprüche 1 bis 5, **dadurch gekennzeichnet, dass** das Turbinenlaufrad aus Scheiben (4, 4', 4") unterschiedlicher Dicke hergestellt wird.

7. Verfahren nach einem der Ansprüche 1 bis 6, **dadurch gekennzeichnet, dass** einzelne Scheiben (4) aus Winkelsegmenten zusammengesetzt werden, bevor das Turbinenlaufrad aus den Scheiben (4, 4', 4") hergestellt wird.

8. Peltonlaufrad (1), das aus mehreren stoffschlüssig miteinander verbundenen Scheiben (4, 4', 4") aufgebaut ist, **dadurch gekennzeichnet, dass** die Scheiben (4, 4', 4") miteinander verschweißt oder durch Hartlöten der Auflagefläche zwischen den einzelnen Scheiben (4, 4', 4") verbunden sind, wobei die einzelnen Scheiben (4, 4', 4") wenigstens an Teilen der Oberfächenkontur des Peltonlaufrades (1) flächig verschweißt sind.

9. Peltonlaufrad nach Anspruch 8, **dadurch gekennzeichnet, dass** wenigstens an Teilen der Obertlächenkontur eine Schicht mit geeigneter Härte und Festigkeit gegen Abrasion aufgeschweißt ist.

10. Peltonlaufrad nach einem der Ansprüche 8 bis 9, **dadurch gekennzeichnet, dass** auf Flügel- bzw. Becher (2) des Peltonlaufrades (1) eine abrasionsfeste Schicht aufgebracht ist.

11. Peltonlaufrad nach Anspruch 10, **dadurch gekennzeichnet, dass** die abrasiortsfeste Schicht durch Flammspritzen oder Plasmaspritzen hergestellt wurde.

12. Peltonlaufrad nach einem der Ansprüche 8 bis 11, **dadurch gekennzeichnet, dass** es aus Scheiben (4, 4', 4") unterschiedlicher Dicke hergestellt ist.

13. Peltonlaufrad nach einem der Ansprüche 8 bis 92, **dadurch gekennzeichnet, dass** einzelne Scheiben (4) aus Winkelsegmenten zusammengesetzt sind.

## Claims

1. Process for manufacture of a Pelton runner (1), where several discs (4, 4', 4") with the contour of the said Pelton runner are layered on top of one another and joined to one another, **characterized in that** the discs (4, 4', 4") are welded to one another or joined by brazing the supporting surfaces between the individual discs (4, 4', 4"), where the individual discs (4, 4', 4") are joined together, at least at parts of the surface contour of the Pelton runner (1), by laminar welding of the of the discs (4, 4', 4").

2. Process according to Claim 1, **characterized in that** the welding material forms a layer with suitable hardness and strength to withstand abrasion.

3. Process according to one of Claims 1 to 2, **characterized in that** an abrasion-resistant layer is applied to the blades or buckets (2) of the Pelton runner (1).

4. Process according to Claim 34, **characterized in that** the abrasion-resistant layer is applied by flame spraying or plasma spraying.

5. Process according to one of Claims 1 to 4, **characterized in that** the discs (4, 4', 4") are manufactured by laser cutting or flame cutting out of metal sheets or metal plates.

6. Process according to one of Claims 1 to 5, **characterized in that** the turbine runner is made of discs (4, 4', 4") of different thicknesses.

7. Process according to one of Claims 1 to 6, **characterized in that** individual discs (4) are assembled from angle segments before the turbine runner is made from the discs (4, 4', 4"),

8. Pelton runner (1), built up from several discs (4, 4', 4") connected by a material-locking joint, **characterized in that** the discs (4, 4', 4") are welded to one another or connected by brazing the supporting surfaces between the individual discs (4, 4', 4"), where the individual discs (4, 4', 4") are joined together, at least at parts of the surface contour of the Pelton runner (1), by laminar welding.

9. Pelton runner according to Claim 8, **characterized in that** a layer with suitable hardness and resistance to abrasion is welded on, at least to parts of the surface contour.

10. Pelton runner according to one of Claims 8 to 9, **characterized in that** an abrasion-resistant layer is applied to blades or buckets (2) of the Pelton runner (1).

11. Pelton runner according to Claim 10, **characterized in that** the abrasion-resistant layer is produced by flame spraying or plasma spraying.

12. Pelton runner according to one of Claims 8 to 11, **characterized in that** it is manufactured from discs (4, 4', 4") of different thicknesses.

13. Pelton runner according to one of Claims 8 to 12, **characterized in that** the individual discs (4) are assembled from angle segments.

## Revendications

1. Méthode de fabrication d'une roue Pelton (1), où plusieurs disques (4, 4', 4"), qui ont le contour de la roue Pelton, sont empilés l'un sur l'autre et reliés l'un à l'autre, **caractérisée en ce que** les disques (4, 4', 4") sont reliés l'un à l'autre par le soudage ou par le brasage des surfaces d'appui entre les disques (4, 4', 4") individuels, où les disques (4, 4', 4") individuels se trouvent reliés au moins sur des parties du contour superficiel de la roue Pelton (1), par le soudage laminaire des disques (4, 4', 4").

2. Méthode selon la revendication 1, **caractérisée en ce qu'**une couche d'une rigidité et stabilité adéquates et résistante à l'abrasion est produite moyennant la matière de soudure.

3. Méthode selon l'une des revendications 1 à 2, **caractérisée en ce qu'**une couche résistante à l'abrasion est appliquée sur les aubes ou augets (2) de la roue Pelton (1).

4. Méthode selon la revendication 3, **caractérisée en ce que** la couche résistante à l'abrasion est appliquée moyennant la pulvérisation à la flamme ou la pulvérisation de plasma.

5. Méthode selon l'une des revendications 1 à 4, **caractérisée en ce que** les disques (4, 4', 4") sont fabriqués à l'aide d'une découpe au laser ou de l'oxycoupage à partir de plaques ou de panneaux de tôle.

6. Méthode selon l'une des revendications 1 à 5, **caractérisée en ce que** la roue motrice de la turbine est fabriquée à partir de disques (4, 4', 4") d'épaisseur différente.

7. Méthode selon l'une des revendications 1 à 6, **caractérisé en ce que** des disques (4) individuels sont assemblés à partir de segments angulaires avant la fabrication de la roue motrice de la turbine à partir des disques (4, 4', 4").

8. Roue Pelton (1) construite à partir de plusieurs disques (4, 4', 4") qui sont reliés l'un à l'autre par adhérence de matériau, **caractérisée en ce que** les disques (4, 4', 4") sont reliés l'un à l'autre par le soudage ou par le brasage des surfaces d'appui entre les disques (4, 4', 4") individuels, où les disques (4, 4', 4") individuels se trouvent reliés au moins sur des parties du contour superficiel de la roue Pelton (1) par le soudage laminaire des disques (4, 4', 4").

9. Roue Pelton selon la revendication 8, **caractérisée en ce qu'**une couche d'une rigidité et stabilité adéquates et résistante à l'abrasion est soudée sur la surface au moins des parties du contour superficiel.

10. Roue Pelton selon l'une des revendications 8 à 9, **caractérisée en ce qu'**une couche résistante à l'abrasion est appliquée sur les aubes ou augets (2) de la roue Pelton (1).

11. Roue Pelton selon la revendication 10, **caractérisée en ce que** la couche résistante à l'abrasion est appliquée moyennant la pulvérisation à la flamme ou la pulvérisation de plasma.

12. Roue Pelton selon l'une des revendications 8 à 11, **caractérisée en ce que** la roue est fabriquée à partir de disques (4, 4', 4") d'épaisseur différente.

13. Roue Pelton selon l'une des revendications 8 à 12, **caractérisée en ce que** des disques (4) individuels sont assemblés à partir de segments angulaires.
